Europäisches Patentamt

European Patent Office

Office européen des brevets

(19)

(11) Numéro de publication : **0 441 741 A1**

(12) **DEMANDE DE BREVET EUROPEEN**

(21) Numéro de dépôt : 91810051.2

(22) Date de dépôt : 23.01.91

(51) Int. Cl.⁵ : **F16J 15/32**

(30) Priorité : 29.01.90 IT 691390 U

(43) Date de publication de la demande :
**14.08.91 Bulletin 91/33**

(84) Etats contractants désignés :
**BE DE FR GB**

(71) Demandeur : **FISITEC FILTER-TECHNIK AG
Lochertstrasse 23
CH-7000 Chur (CH)**

(72) Inventeur : **Dorizzi, Emilio
72, Mühlebachstrasse
CH-8008 Zürich (CH)**

(74) Mandataire : **Kirker, Gaylord Emile
c/o KIRKER & Cie S.A. 14, Rue du Mont-Blanc
Case postale 1736
CH-1211 Genève 1 (CH)**

(54) **Bague d'étanchéité particulièrement pour arbres rotatifs.**

(57)    Bague d'étanchéité en caoutchouc ou en matière plastique-élastique similaire, particulièrement pour arbres rotatifs, ayant une face périphérique extérieure d'appui (10) sur une surface fixe, une surface intérieure avec trois lèvres annulaires (11, 12, 13), parallèlement espacées et délimitant entre elles deux chambres annulaires (14, 15) ouvertes vers le centre et destinées à contenir de la graisse ou du lubrifiant, et deux surfaces de tête supérieure et inférieure, dont chacune présente au moins un creux de souplesse (16, 17).

Fig. 2

EP 0 441 741 A1

## BAGUE D'ETANCHEITE PARTICULIEREMENT POUR ARBRES ROTATIFS

La présente invention concerne en général les garnitures d'étanchéité en caoutchouc ou en matière plastique-élastique et plus particulièrement une bague d'étanchéité pour arbres rotatifs opérant en présence de liquides, poussière ou boue.

L'objet principal de l'invention c'est de fournir une bague d'étanchéité pour arbres vraiment efficace et efficiente, comme pare-liquides, pare-huile, pare-poussière, pare-boue, grâce à une configuration spéciale de sa section et à la disposition des parties appuyant sur la surface de l'arbre.

Dans ce but, la bague d'étanchéité ici proposée est réalisée en caoutchouc ou en matière similaire et présente une face périphérique extérieure d'appui, une face intérieure avec trois lèvres annulaires parallèlement espacées et délimitant entre elles deux chambres annulaires, et deux surfaces de tête, une supérieure et une inférieure, toutes les deux avec au moins un creux de souplesse.

Un exemple de réalisation pratique de l'invention est illustré dans le dessin ci-joint et ses détails seront l'objet de la description ci-dessous.

Dans le dessin sus-dit :

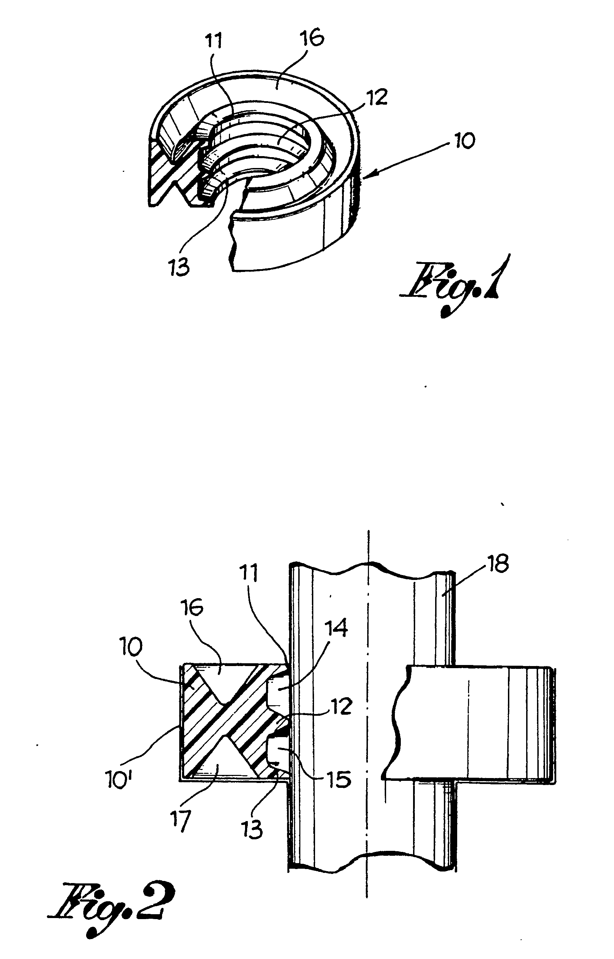

La fig. 1 montre la bague d'étanchéité coupée ; et la fig. 2 montre une section de la bague associée à l'arbre.

La bague d'étanchéité comprend un corps 10 en caoutchouc ou matière similaire, dont la face périphérique extérieure 10' sert pour l'appui contre une surface fixe. La face intérieure du corps annulaire présente trois lèvres annulaires 11, 12, 13 parallèlement espacées et délimitant entre elles deux chambres annulaires 14, 15 ouvertes vers le centre de la bague. Chaque surface de tête, la supérieure et l'inférieure du corps 10, présente un creux annulaire 16, 17 de préférence mais pas nécessairement en V, les creux 16, 17 étant destinés à donner l'élasticité radiale nécessaire à la partie de la bague avec les lèvres 11, 12, 13.

Les extrémités libres de ces lèvres peuvent être amincies et donc pointues, mais au moins celles des deux lèvres externes peuvent aussi être tronquées. Les lèvres 11, 12, 13 sont en tout cas destinées à appuyer sur la surface d'un arbre 18 (voir fig. 2) avec une certaine précharge grâce à la souplesse due à la présence des creux 16, 17 dans les surfaces de tête, cette souplesse assurant aussi une compensation des jeux éventuels et de l'usure. D'autre part, les chambres annulaires 14, 15 peuvent contenir de la graisse ou du lubrifiant qui, en plus d'améliorer l'accouplement permet d'obtenir, en combinaison avec les lèvres 11, 12, 13, une étanchéité efficace aux fluides et en particulier pour un emploi efficient et avantageux de la bague d'étanchéité comme pare-fluide, pare-huile, pare-poussière, pare-boue sur les arbres rotatifs.

## Revendications

1. Bague d'étanchéité en caoutchouc ou en matière plastique-élastique similaire, particulièrement pour arbres rotatifs, caractérisée en ce qu'elle présente une face périphérique extérieure (10) d'appui sur une surface fixe, une face intérieure avec trois lèvres annulaires (11, 12, 13), parallèlement espacées et délimitant entre elles deux chambres annulaires (14, 15) ouvertes vers le centre, ces lèvres étant destinées à appuyer sur la surface d'un arbre, tandis que les chambres susdites peuvent contenir de la graisse ou du lubrifiant, et deux surfaces de tête supérieure et inférieure, chacune avec au moins un creux de souplesse (16, 17).

2. Bague d'étanchéité selon la revendication 1, dont les lèvres (11, 12, 13) sont amincies vers leur extrémité pour s'effiler ou sont tronquées.

3. Bague d'étanchéité selon les revendications 1 et 2, dans laquelle les creux de tête (16,17) sont en V.

*Fig.1*

*Fig.2*

3